# EUROPEAN PATENT SPECIFICATION

(11) **EP 3 704 423 B1**
(45) Date of publication and mention of the grant of the patent: **19.07.2023**
(21) Application number: 18807127.8
(22) Date of filing: 30.10.2018
(51) Int. Cl.: F24F 11/74, G01F 5/00, F02D 41/18, F24F 11/88, G01F 1/684, G01P 5/10, G01F 1/688, G01P 21/02, F24F 110/30

(54) **AIR FLOW SENSOR AND MEASURING METHOD THEREFOR**
LUFTSTRÖMUNGSSENSOR UND MESSVERFAHREN DAFÜR
CAPTEUR D'ÉCOULEMENT D'AIR ET PROCÉDÉ DE MESURE ASSOCIÉ

(30) Priority: 30.10.2017 GB 201717854
(43) Date of publication of application: 09.09.2020
(73) Proprietor: Zehnder Group International AG, 5722 Gränichen (CH)
(72) Inventor: KENTCH, Chris, Bideford Devon EX39 3RH (GB); RAHIMI, Darius, Littlehampton Sussex BN177LB (GB)
(74) Representative: Dehns
(86) International application number: PCT/IB2018/058505
(87) International publication number: WO 2019/087075

(56) References cited:
- EP-A1- 3 001 154
- WO-A1-99/20984
- WO-A1-2010/122117
- WO-A1-2016/189835
- GB-A- 2 607 194
- US-A- 4 571 996
- US-A1- 2003 097 875

## Description

This invention relates to air flow sensors, particularly those found within ventilation fans such as extractor fans.

When installing ventilation fans, like those found, for example in domestic kitchens and bathrooms, it is important to calibrate the speed of the fan correctly, to ensure adequate airflow through the fan. The amount of ventilation provided for a given power and/or for a given impeller speed may vary depending on manufacturing variations and/or the surrounding installation environment. Guidelines typically recommend airflows of a certain number of litres per minute or recommend a certain number of air changes per hour for a room. Thus in order to improve this calibration, an air flow sensor may be provided within the fan. The air flow sensor can be used to directly measure the amount of air passing through the fan, and thus can be used to accurately quantify the ventilation provided by a certain power and/or impeller speed.

In addition to calibration, air flow sensors are also used in some fans to provide constant monitoring of the air flow rate during use, and thus to provide feedback to the motor such that the air flow rate can be kept at a desired level if, for example, the surrounding conditions change.

Some ventilation fans are configured to provide different levels of ventilation at different times, e.g. a constant background "trickle" level most of the time and a higher "boost" level when additional ventilation is required. For this reason continuous monitoring of air flow over a wide measurement range is required.

Air flow sensors commonly provided in these types of fans typically comprise two temperature sensors arranged in line with the direction of air flow, with a heating element positioned between the two. When air flows over the temperature sensors, the temperature distribution of the heat from the heating element is shifted towards the downstream temperature sensor, and differing signals from the two temperature sensors can be used to calculate the rate of air flow. While this type of air flow sensor can be arranged to be very sensitive to low flow rates, in such arrangements it can then be easily saturated at higher flow rates as it cannot provide a large range of measurement. In addition these sensors typically require highly laminar flow over the sensor to provide accurate results and as such these air flow sensors cannot be positioned close to the spinning impeller, where helical air flow and turbulence is high, necessitating an increase in the size of the fan to ensure sufficient distance between the sensor and the impeller. Ventilation fans are often installed in space-limited locations and as such any increase in size is undesirable. US 2003/097875 A1 discloses an airflow sensor comprising a heated temperature sensor spaced from a baseline temperature sensor in which the presence or absence of airflow is detected based upon a temperature differential between the temperature sensors.

Typical air flow sensors also comprise multiple expensive electronic components that require high precision and thus low manufacturing tolerances, increasing the cost and complexity of manufacture.

According to a first aspect, the invention provides an air flow sensor comprising:
a housing having an inflow aperture, an outflow aperture and an air flow pathway from the inflow aperture to the outflow aperture;
a first sensing element, exposed to the air flow pathway; and
a second sensing element, isolated from the air flow pathway.

By providing inflow and outflow apertures such that air flows through the air flow sensor along an air flow pathway, the impact of turbulent flow upon the sensor is reduced, leading to less uncertainty in the rate of air flow rate measured.

In use, the sensor determines an air flow rate by comparing outputs from the first and second sensing elements. Because the first and second sensing elements are respectively exposed to and isolated from the air flow pathway, the difference in their outputs is indicative of the rate of air flow. The second sensing element that is isolated from the air flow pathway will be relatively unaffected by changes to the air flow through the airflow sensor and thus provides a comparative measure of the ambient environment in the absence of air flow. Meanwhile, the first sensing element that is exposed to the air flow will be affected by the flow of air over the sensing element and its output will vary with changes to the rate of air flow over it. By comparing the first sensing element output with the second sensing element output, the changes due to air flow can be separated from changes to the ambient environment and are thus indicative of the flow rate of air through the air flow sensor.

It has been found that such an air flow sensor can use a small number of inexpensive components, while still providing accurate measurements across a wide range of air flow rate measurements

The first sensing element and the second sensing element may take any suitable forms so long as between them they can detect changes due to the increased air flow compared with the ambient conditions. In one embodiment the second sensing element may comprise a temperature sensing element. In use this temperature sensing element measures an ambient temperature. In some examples where the first sensing element may be arranged to be heated, a temperature of the first sensing element may be directly or indirectly measured, and this measured temperature can then be used in combination with the determined ambient temperature to calculate the air flow rate.

In some examples, the first sensing element may comprise at least one diode, through which, in use, a current is passed. The current causes the diode to be heated and the relationship between current and temperature increase is known such that in the absence of other effects, the expected temperature of the diode is known for a given current. The voltage drop across the diode is dependent upon its temperature. Further, as the relationship between diode temperature and diode voltage drop is known, a first voltage measured across the diode can be used to determine the temperature reached by the diode. As the expected temperature is known from the supplied current, any difference from this expected temperature can be attributed to a temperature loss due to air flow cooling and thus can be used as a measurement of air flow over the diode. In some such embodiments the first sensing elements comprises a plurality of diodes connected in series. Using a plurality of diodes connected in series increases the change in voltage drop seen due to changes in temperature, and for a given voltage measurement precision therefore more precise measurements of temperature can be made. For example, two diodes in series provide double the voltage change compared to a single diode. In such embodiments, it is important to ensure that each of the plurality of diodes is equally exposed to air flow cooling, e.g. by ensuring the diodes are located close to each another. In some embodiments, the first sensing element comprises a plurality of series connected diodes (e.g. two) provided in a single package. This ensures that the diodes are spaced closely together and experience similar airflow exposure as well as being insulated by the same package, and reduces the individual component count.

The second sensing element may comprise a negative temperature coefficient (NTC) resistor, and a second voltage is measured across the NTC resistor to quantify the ambient (isolated) temperature. This measurement can be used to compensate for ambient changes in temperature not due to the current heating and not due to air flow cooling. This data can therefore be used to ensure that only the temperature change due to the air flow cooling is used to determine the air flow rate across the diode.

In an alternative embodiment, the sensing elements are both arranged to be heated and are arranged to be heated equally (e.g. by supplying the same current to substantially identical sensing elements). In use the air flowing along the air flow pathway carries heat away from the first sensing element, whereas the second sensing element, isolated from the air flow pathway, experiences no cooling due to air flow. As a result, the first and second sensing elements achieve differing equilibrium temperatures which may be directly or indirectly measured to quantify the air flow rate.

The air flow sensor may further comprise a comparator arranged to compare outputs from the first and second sensing elements. Preferably, the comparator is arranged to compare the first voltage with the second voltage to output an ambient temperature compensated indication of the air flow rate over the first sensing element. The output of the comparator may be fed directly to a fan control (e.g. a motor control) or it may be scaled (e.g. amplified) in the process. A calibrated look up table may be used (especially if the relationship between the comparator output and the corresponding air flow rate is non-linear) to quantify the actual air flow rate from this indication. Preferably the comparator comprises an operational amplifier.

In some embodiments the air flow sensor comprises an input air redirecting member that extends from the housing such that, in use, air is redirected into the inflow aperture. An input air redirecting member configured in this way may both reduce turbulence, as will be described in more detail below, and increase the volume of air flowing into the air flow sensor because air flow that would otherwise flow past the inflow aperture is redirected into the sensor housing. A larger absolute air flow rate results in a decreased fractional uncertainty of air flow rate measurements for a given measurement precision. The input air redirecting member is particularly effective in the case of fans that induce a rotational airflow. For example a motor driven impeller in a typical axial or centrifugal fan imparts an element of rotation to the air flowing in towards the impeller. Thus when an air flow sensor is positioned on the inlet side of the impeller it will typically be exposed to air flowing with such a rotational motion. The angle of the air will vary with the speed of the fan and the induced air flow and therefore it is difficult to align the airflow sensor with the incoming airflow. Thus there will normally be a component of the airflow that is lateral to the airflow housing. This reduces the flow of air through the inflow aperture. The input air redirecting member is able to catch some of this lateral air flow and redirect it into the inflow aperture thus increasing the flow through the housing.

Preferably the input air redirecting member extends from an edge of the inflow aperture. Providing the air redirecting member at an edge of the inflow aperture provides the most efficient way to catch and redirect air into the aperture. Where the sensor is mounted to a fan, the redirecting member is preferably provided on an edge of the inflow aperture that will catch the airflow generated by the fan. For example where the airflow has a lateral component passing across the inflow aperture, the redirecting member is preferably provided on the downstream side of the inflow aperture (downstream being with reference to the cross-flow across the inflow aperture). The redirecting member preferably acts as a scoop to gather air from the incoming airflow and redirect it into the inflow aperture.

Many ventilation fans comprise an impeller which is driven to rotate in order to draw air through a duct. As discussed above, a consequence of using a rotating impeller is that, within the fan, the air flow often has a significant rotating component in the plane perpendicular to the axis of rotation of the impeller.

It is desirable to increase laminar flow through the sensor by reducing any component of the air's motion that is perpendicular to the air flow pathway. The input air redirecting member may therefore extend from the housing in a direction substantially parallel to the air flow pathway. This reduces turbulence within the air flow pathway and increases the uniformity of air flowing over the first sensing element, decreasing the uncertainty and variability of air flow measurements.

To further increase the air flow rate through the air flow sensor in some embodiments the housing comprises a guiding surface arranged to reduce pressure at the outflow aperture. The guiding surface preferably guides air flowing outside the housing away from the outflow aperture. The guiding surface shields the outflow aperture and consequently a region of low pressure is formed just outside the outflow aperture. This draws air through the air flow sensor, increasing the air flow through the sensor which, as explained above, reduces the uncertainty on air flow rate measurements. The guiding surface is preferably formed on a projection or fin extending from the housing proximal to the outflow aperture. Further preferably the projection extends at least partially in a direction perpendicular to the air flow pathway.

While it is desirable to have a large flow rate, in order to reduce the uncertainty of air flow rate measurements, it is also important to ensure that the first sensing element does not saturate at air flow rates lower than the upper limit of the desired sensitivity range. The first sensing element may have a limited dynamic sensing range, and therefore it is desirable to limit its exposure to very high air flow rates, while ensuring that the air flow it is exposed to is still stable, uniform and representative. If a stable, high air flow rate is drawn through the sensor housing as a whole and all of that air flow is directed over the sensor, the sensor will saturate, limiting the usefulness of the sensor. For example in the case of a heated sensing element that detects the cooling effect of air flow over the sensing element, if all air drawn through the sensor housing is used to cool the sensing element it will quickly be cooled back to or near to the ambient temperature. When the flow rate is high enough to cool the sensing element to near to the ambient temperature, changes in air flow rate may cause only very small changes in the temperature of the sensing element, which may be undetectable, or only detectable with large uncertainties. It is advantageous therefore to prevent the flow rate over the sensing element reaching this level.

Accordingly, in a set of embodiments the air flow sensor comprises two parallel pathways comprising a sensor pathway and a relief pathway. These pathways are parallel in the sense that they both connect the inflow aperture to the outflow aperture by different routes without those routes necessarily being geometrically parallel. The sensor pathway directs a portion of the air (less than the whole of the incoming airflow) over the first sensing element to provide the sensing function, while the relief pathway directs the rest of the air flow from the inflow aperture to the outflow aperture but does not pass over the first sensing element. The range of flow rates to which the first sensing element is exposed is therefore compressed, as a proportion of all air flow passing through the sensor passes along the relief pathway rather than the sensor pathway. Resultantly, for a given dynamic sensing range of the first sensing element, the air flow sensor is able to measure a wider range of air flows.

Preferably the housing comprises an internal baffle situated between the inflow aperture and the out flow aperture that comprises at least a primary opening for the sensor pathway and a relief opening for the relief pathway. Air flowing from the inflow aperture to the outflow aperture via the primary opening defines the sensor pathway, and air flowing from the inflow aperture to the outflow aperture via the relief opening defines the relief pathway.

The relative sizes of the primary and relief openings may be adjusted to vary the exposure of the first sensing element. Increasing the size of the primary opening and/or decreasing the size of the relief opening increases the exposure of the first sensing element and vice versa. While the first sensing element may be disposed anywhere along the sensor pathway so as to interact with and/or measure the air flow in that pathway, in some preferred embodiments, the first sensing element may be disposed at least partially within the primary opening and the primary opening may therefore be sized to accommodate one or more dimensions of the first sensing element. Disposing the first sensing element proximate to or within the primary opening minimises the chance of air flowing along the relief pathway passing over the first sensing element and adversely affecting measurements.

In preferred embodiments, the internal baffle is substantially planar and is positioned substantially perpendicular to air flowing through the inflow aperture.

The relief opening may be positioned generally in line with the inflow aperture, and the primary opening may be positioned laterally offset from the relief opening, such that it is not in line with the inflow aperture. As a result any dust or larger particles drawn into the air flow sensor will be more likely to travel along the relief pathway and through the relief opening rather than along the air flow pathway in which the first sensing element is disposed, preventing damage to the sensing element or degradation in air flow measurements.

While the isolation of the second sensing element from the air flow pathway may be achieved in some cases simply by locating the second sensing element in a sufficiently remote part of the housing, or behind a partial obstruction such as a partial screen or baffle, it is preferred to effect more robust isolation. Therefore in some embodiments the sensor comprises an internal divider that physically divides the sensor housing into active and isolated sections, wherein the isolated section is substantially isolated from any airflow between the inflow and outflow apertures. The first sensing element may then be located in the active section and the second sensing element may be located in the isolated section. Physically dividing the sensor in this way ensures that the second sensing element is reliably isolated from air flow, even when, for example, the sensor experiences highly turbulent air flow.

Preferably the internal divider divides the airflow sensor along a direction substantially parallel to the air flow pathway. In some embodiments the first and second sensing elements are provided on a printed circuit board (PCB), and the PCB at least partially forms the internal divider. In such embodiments the first and second sensing elements may be disposed on opposite sides of the PCB, with the opposite sides of the PCB located in the active and isolated sections respectively. Using the PCB as a structural element of the sensor decreases the weight and part count of the sensor and thus reduces the complexity of production.

The air flow sensor disclosed herein is particularly suited for use within a fan, for example a domestic ventilation fan in a kitchen or bathroom. Accordingly, the invention extends to a fan comprising:
a fan housing;
the fan being arranged to create air flow through the fan housing; and
an air flow sensor as disclosed herein, arranged to measure an air flow rate through the fan housing.

The fan may comprise an impeller to create the air flow. The fan may be an axial fan or a centrifugal fan or a mixed flow fan. The rate at which air flows through the fan housing is at least partially dependent on the rate at which the impeller spins. In preferred embodiments, the angular rate at which the impeller spins is controllable, such that the air flow rate through the fan housing is controllable.

In some embodiments the fan comprises a control module or controller, arranged to vary the air flow through the fan. For example the controller may control the angular rate at which the impeller spins. Preferably the controller controls air flow through the fan (e.g. controls the angular rate at which the impeller spins) in response to the air flow rate measured by the air flow sensor. In some embodiments the controller controls the angular rate in response to the air flow rate measured by the air flow sensor to achieve a target air flow rate.

As mentioned previously, helical airflow created by the spinning impeller can be detrimental to the operation of typical air flow sensors, and because the helical effect is greater closer to the impeller, these typical air flow sensors must be positioned within a fan with a significant axial separation between the sensor and the impeller, for instance up to 50 mm of axial separation. In contrast however, the features of the air flow sensor described herein mean that the axial distance from sensor to impeller may be reduced, for example to less than 30 mm, or to around 20 mm. A smaller axial separation between air flow sensor and impeller means the overall length of the fan may be reduced, which is advantageous when installing a fan where space is limited, e.g. within a ceiling cavity.

The invention extends to a method of measuring an air flow rate comprising:
arranging a first sensing element to be exposed to an air flow pathway and to output a first signal;
arranging a second sensing element to be isolated from the air flow pathway and to output a second signal; and
comparing the first and second signals to determine the air flow rate.

An air flow sensor is disclosed comprising:
a housing having an inflow aperture, an outflow aperture and an air flow pathway from the inflow aperture to the outflow aperture; and
an air redirecting member that extends from the housing close to the inflow aperture.

A method of sensing air flow is disclosed comprising:
providing a housing comprising an inflow aperture and an outflow aperture;
providing an air redirecting member that extends from the housing close to the inflow aperture;
redirecting air into the housing using the inflow baffle such that it flows through the housing with an air flow rate from the inflow aperture to the outflow aperture;

An air flow sensor is disclosed comprising:
a housing having an inflow aperture, an outflow aperture and an air flow pathway from the inflow aperture to the outflow aperture; and
a guiding surface that extends from the housing close to the outflow aperture and arranged to reduce the pressure at the outflow aperture.

A method of sensing air flow is disclosed comprising:
providing a housing comprising an inflow aperture and an outflow aperture;
providing a guiding surface that extends from the housing close to the outflow aperture;
redirecting air flowing outside the housing away from the outflow aperture using the guiding surface.

The preferred features described above in relation to the air redirecting member and the guiding surface apply equally to these air flow sensors and methods.

Features of any aspect or embodiment described herein may, wherever appropriate, be applied to any other aspect or embodiment described herein. Where reference is made to different embodiments or sets of embodiments, it should be understood that these are not necessarily distinct but may overlap.

Certain preferred embodiments of the invention will now be described, by way of example only, with reference to the accompanying drawings, in which:
Figure 1 is an exploded view of an air flow sensor according to an embodiment of the present invention.
Figure 2 is a cut away view of the air flow sensor according to the embodiment of Fig. 1;
Figure 3 is a cross-sectional view of the flow sensor according to the embodiment of Fig. 1;
Figure 4 is an alternative cross-sectional view of the flow sensor according to the embodiment of Fig. 1;
Figure 5 is a circuit diagram of the air flow sensor according to an embodiment of the present invention.

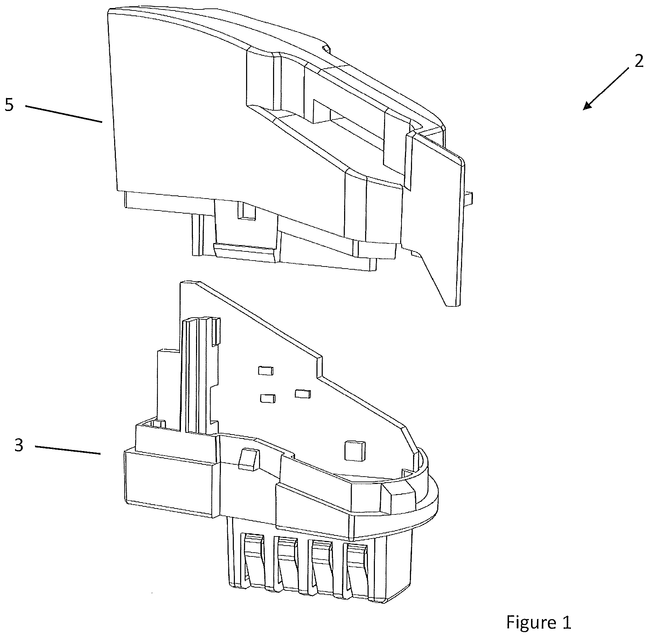

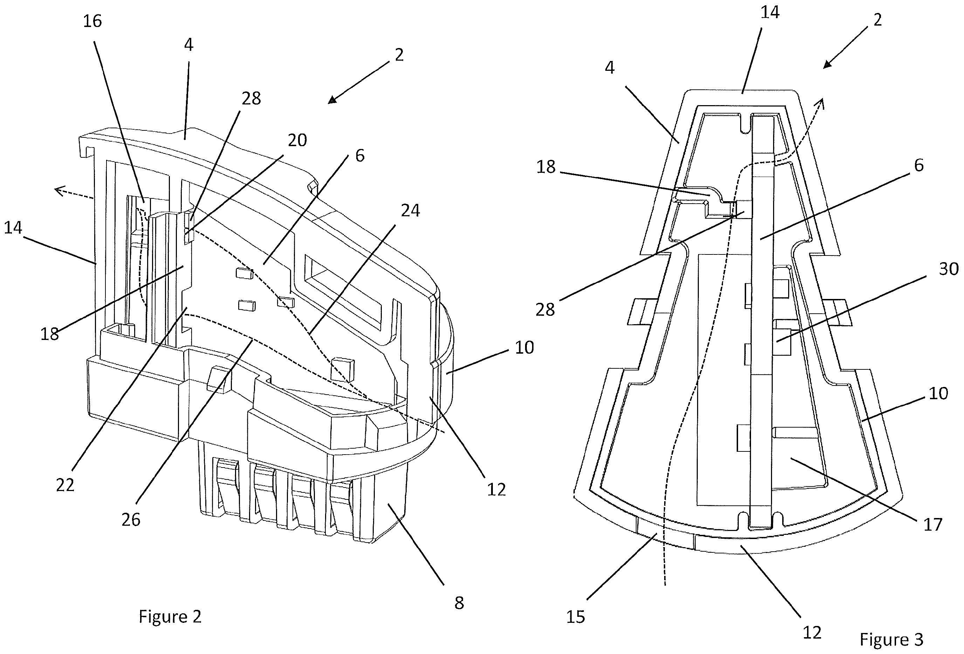

An exploded view of an air flow sensor 2 is illustrated in Figure 1. The air flow sensor 2 comprises a lower portion 3 and an upper portion 5 which are secured together when the air flow sensor 2 is assembled, with the upper portion 5 partially enclosing the lower portion 3. Figure 2 shows a cutaway view of the air flow sensor 2 when assembled. The air flow sensor 2 comprises a housing 4, a printed circuit board (PCB) 6, and an electrical connection 8 disposed at the bottom of the air flow sensor 2. Figure 3 shows a cross-sectional view of just the lower portion 3 of the air flow sensor.

The housing 4 comprises an outer casing 10 which defines an internal cavity that extends along a longitudinal axis from an upstream end 12 to a downstream end 14. An inflow aperture 15 and an outflow aperture 16 are formed in the outer casing 10 such that they open onto the internal cavity, with the inflow aperture 15 located proximal to the upstream end 12 and the outflow aperture 16 located proximal to the downstream end 14.

The PCB 6 is located entirely within the internal cavity, is substantially planar and extends longitudinally and vertically to match the dimensions of the internal cavity. The PCB 6, the inflow aperture 15 and the outflow aperture are positioned to create an isolated region 17 within the internal cavity. An opening, proximal to the outflow aperture 16, is formed in the PCB 6 to allow air to flow, when the sensor is in use, through the air flow sensor 2 from the inflow aperture 15 to the outflow aperture.

The housing 4 further comprises a vertical baffle 18 which extends, perpendicularly to the longitudinal axis, from the PCB 6 to the outer casing 10. A primary opening 20 and a relief opening 22 are formed in the vertical baffle 18. The relief opening 22 is vertically aligned with the inflow aperture 15, and the primary opening 20 is located above the relief opening 22, such that it is vertically offset from the inflow aperture 15.

As a result, two air flow pathways through the air flow sensor 2 from the inflow aperture 15 to the outflow aperture 16 are formed. In use, air entering the inflow aperture 15 may flow to the outflow aperture 16 via either the primary opening 20 or the relief opening 22, following a primary pathway 24 or a relief pathway 26 respectively. The isolated region 17 is substantially isolated from both the primary and relief pathways 24, 26.

In use, air flows around the air flow sensor 2 at an air flow rate in a direction which is at least partially parallel to the longitudinal axis. A proportion of the air flowing past the air flow sensor 2 enters the air flow sensor 2 via the inflow aperture 15, flows through the internal cavity, following either the primary pathway 24 or the relief pathway 26, and out of the outflow aperture 16. A primary proportion of the air flowing through the internal cavity follows the primary pathway 24, with the remaining proportion following the relief pathway 26. The size of the primary proportion is dependent upon the relative sizes of the primary and relief openings 20, 22.

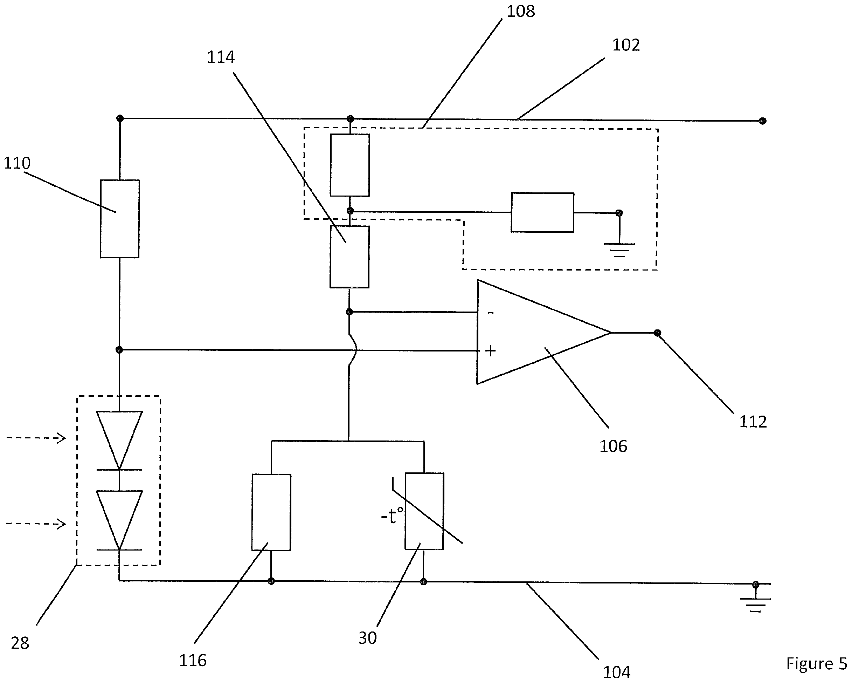

The PCB 6 comprises circuitry (as shown in Figure 5 and described in more detail below) that enables the air flow sensor 2 to measure the air flow rate. The PCB 6 comprises a series connected diode pair 28 that is disposed partially within the primary opening 20. As a result, it is exposed to the primary proportion of air flowing through the air flow sensor 2. The PCB 6 further comprises a temperature sensor 30 comprising a negative temperature coefficient (NTC) thermistor, which is disposed on the opposite side of the PCB 6 to the diode pair 28, in the isolated region 17 of the internal cavity such that it is isolated from both the primary and relief air flow pathways 24, 26.

In use, a current is passed through the diode pair 28, heating it up. When air flows over the diode pair 28 it carries heat away such that, for a given applied current and a certain air flow rate, the diode pair 28 achieves an equilibrium temperature. The properties of diodes are such that a voltage dropped over the diode pair 28 is dependent upon its temperature and accordingly, the voltage dropped over the diode pair 28 is indicative of the equilibrium temperature achieved.

The temperature sensor 30 is, as described above, isolated from the primary and relief air flow pathways 24, 26 and therefore has a temperature equal to an ambient air temperature. The temperature sensor 30 has a resistance which is indicative of its temperature, and as such, in use this resistance is measured to quantify the ambient air temperature.

By combining the voltage measured over the diode pair 28 and the resistance of the temperature sensor 30, and using a suitably calibrated look up table (or a suitably calibrated gain), the air flow rate of air passing the air flow sensor can be determined.

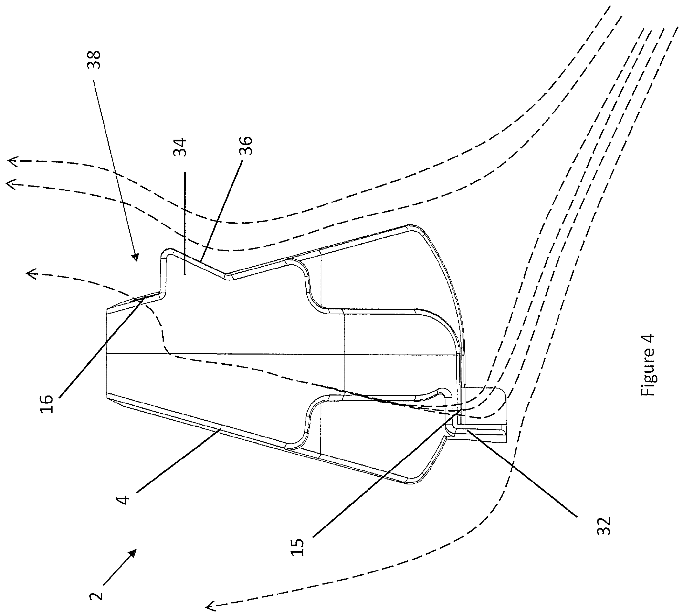

Figure 4 shows a cross sectional view of the upper portion 5 of the air flow sensor 2 illustrated in Figure 1 and 2. It is illustrated that the housing 4 further comprises an inflow baffle 32 located proximal to the inflow aperture 15 and a guiding surface 34 located proximal to the outflow aperture 16. Air (with its path depicted by dashed lines) is shown flowing through and past the air flow sensor, as it would during use.

The inflow baffle 32 extends longitudinally away from the housing 4 from an edge of the inflow aperture 15, thus acting as a "scoop", which captures air that would otherwise flow past, and not enter, the air flow sensor 2. The inflow baffle 32 also serves to redirect air entering the air flow sensor 2, reducing the component of its motion perpendicular to the longitudinal axis.

The inflow baffle 32 therefore increases the amount of air entering the air flow sensor 2, whilst also reducing the turbulent flow inside the air flow sensor 2. This serves to decrease both the fractional uncertainty on air flow measurements made by the air flow sensor 2 (for a given measurement precision) and the variability of air flow measurements that may arise due to turbulent flow.

The housing further comprises a guiding surface 34 formed on a projection 36, which shields the outflow aperture 16 from air flowing past the air flow sensor 2 by redirecting air that would otherwise flow past the outflow aperture 16. A region of low pressure 38 is thereby formed just outside the outflow aperture 16, which serves to draw air through the air flow sensor 2, increasing the amount of air entering the air flow sensor 2. This, as highlighted above, decreases the fractional uncertainty on air flow measurements made by the air flow sensor.

A circuit suitable for use in the air flow sensor 2 is illustrated in Figure 5. The circuit comprises positive and ground rails 102, 104, an operational amplifier 106, a series connected diode pair 28 and a temperature sensor 30 along with a voltage regulation circuit portion 108. The operational amplifier 106 comprises inverting and non-inverting inputs along with an output 112 that produces an output signal.

The diode pair 28 comprises an anode and a cathode and is forward biased, such that the anode is connected to the positive rail 102, via a current limit resistor 110, and the cathode is connected to the ground rail 104. The non-inverting input of the operational amplifier 106 is connected to the anode of the diode pair 28,

The voltage regulation portion 108 comprises an input connected to the positive rail 102 and an output which is connected to the inverting input of the operation amplifier 106 via a voltage divider resistor 114. The temperature sensor 30 is connected between the ground rail 104 and the inverting input of the operation amplifier 106 in parallel with a tuning resistor 116.

In use, a current, passes through the diode pair 28, causing the diode pair 28 to heat up. The diode pair 28 is positioned, as described above with reference to Figures 2, 3 and 4, such that air, indicated by dashed arrows, flows over and consequently cools the diode pair 28. The degree of cooling provided by the air flow depends upon both the rate at which air flows over the diode pair 28, and the ambient temperature of the air. For example a greater air flow rate would increase the cooling provided to the diode pair 28, as would a cooler ambient temperature. For a given ambient temperature and air flow rate, the diode pair 28 will reach an equilibrium temperature. Due to known properties of diodes, a diode voltage dropped over the diode pair 28 is dependent upon the temperature of the diode, and varies such that as the temperature increases, the diode voltage decreases. During use, therefore, the non-inverting input is at a non-inverting input voltage that decreases as the temperature of the diode pair 28 increases, at a rate dependent upon properties of the diode pair 28.

The temperature sensor 30, as discussed above with reference to Figures 2, 3 and 4, is isolated from the air flow to which the diode pair 28 is exposed. The temperature sensor 30 is therefore operable to sense the ambient air temperature unaffected by any cooling airflow. The temperature sensor 30 comprises a negative temperature coefficient (NTC) resistor, and therefore has a temperature-resistance relationship such that the resistance decreases as the ambient temperature increases.

The voltage regulation portion 108 is arranged to output a constant voltage. The voltage divider resistor 114, the temperature sensor 30 and the tuning resistor 116 make up a voltage dividing circuit, such that during use, the inverting input of the operational amplifier 106 is at an inverting input voltage that is dependent upon the relative resistances of the voltage divider resistor 114, the temperature sensor 30 and the tuning resistor 116.

The circuit is operable over a working range of ambient temperatures, and over this working range the resistances of the divider resistor 114 and the tuning resistor 116 are largely independent of temperature, in that any changes to their resistances due to ambient temperature changes are small in comparison to that of the temperature sensor 30. As a result, the change in the inverting input voltage occurring due to a change in the ambient temperature is principally a consequence of the aforementioned temperature-resistance relationship of the temperature sensor 30.Therefore, over the working range of temperature, as the ambient temperature increases, the inverting input voltage decreases at a rate dependent upon properties of the temperature sensor 30.

The operational amplifier 106 operates as is typically known in the art, such that the output signal at the output 112 is proportional to the difference between the inverting input voltage and the non-inverting input voltage. The resistances of the voltage divider resistor 114 and the tuning resistor 116, and properties of the temperature sensor 30 and diode pair 28 are selected such that any change in ambient temperature affects the inverting and non-inverting input voltages identically. For example, if an increase in ambient temperature of 5° C causes the resistance of the temperature sensor to increase by 500 Ω, and the diode voltage of the diode pair 28 to decrease by 0.1 V, the resistances of the voltage divider resistor 114 and the tuning resistor 116 would be selected such that the increase in temperature sensor 30 resistance causes the inverting input voltage to also decrease by 0.1 V. Selecting the resistances in such a manner is a technique that is well known in the art. The result of this is that changes in ambient temperature do not affect the output signal, as this is proportional to the difference between the inverting and non-inverting input voltages.

Consequently, a measurement of the air flow rate, with the effect of changes in ambient temperature stripped out, is reliably indicated by the output signal without the need for complex digital logic.

The output signal may be used as direct fan control, or may be fed into further logic or circuits to achieve effective fan control as discussed above.

It will be appreciated by those skilled in the art that the invention has been illustrated by describing one or more specific embodiments thereof, but is not limited to these embodiments; many variations and modifications are possible, within the scope of the accompanying claims.

## Claims

1. An air flow sensor (2) comprising:
A housing (4) having an inflow aperture (15), an outflow aperture (16) and an air flow pathway (24) from the inflow aperture (15) to the outflow aperture (16);
a first sensing element (28), exposed to the air flow pathway (24); and
**characterised by** a second sensing element (30), isolated from the air flow pathway (24).

2. An air flow sensor (2) as claimed claim 1, wherein the second sensing element (30) comprises a temperature sensing element and optionally comprises a negative temperature coefficient (NTC) resistor.

3. An air flow sensor (2) as claimed in any preceding claim, wherein the first sensing element (28) comprises at least one diode, through which, in use, a current is passed.

4. An air flow sensor (2) as claimed in claim 1, wherein the sensing elements (28, 30) are arranged to be heated equally.

5. An air flow sensor (2) as claimed in any preceding claim, further comprising a comparator (106) arranged to compare outputs from the first and second sensing elements (28, 30).

6. An air flow sensor (2) as claimed in any preceding claim, further comprising an input air redirecting member (32) that extends from the housing (4) such that, in use, air is redirected into the inflow aperture (15), wherein optionally the input air redirecting member (32) extends from an edge of the inflow aperture (15).

7. An air flow sensor (2) as claimed in any preceding claim, wherein the housing (4) comprises a guiding surface (34) arranged to reduce pressure at the outflow aperture (16).

8. An air flow sensor (2) as claimed in any preceding claim further comprising two parallel pathways comprising a sensor pathway (24) and a relief pathway (26).

9. An air flow sensor (2) as claimed in any preceding claim wherein the housing (4) comprises an internal baffle (18) situated between the inflow aperture (15) and the outflow aperture (16) that comprises at least a primary opening (20) for the sensor pathway (24) and a relief opening (22) for the relief pathway (26), wherein optionally the first sensing element (28) is disposed at least partially within the primary opening (20) and/or the relief opening (22) is generally in line with the inflow aperture (15) and the primary opening (20) is offset from the relief opening (22).

10. An air flow sensor (2) as claimed in any preceding claim, further comprising an internal divider (6) that physically divides the sensor housing (4) into active and isolated sections (17), wherein the isolated section (17) is substantially isolated from any airflow between the inflow and outflow apertures (15, 16).

11. An air flow sensor (2) as claimed in claim 10, wherein the internal divider (6) divides the airflow sensor (2) along a direction parallel to the air flow pathway (24).

12. An air flow sensor (2) as claimed in claim 10 or 11, wherein the first and second sensing elements (28, 30) are provided on a printed circuit board (PCB) (6), and the PCB (6) at least partially forms the internal divider (6).

13. A fan comprising:
a fan housing;
the fan being arranged to create air flow through the fan housing; and
an air flow sensor (2) as claimed in any preceding claim, arranged to measure an air flow rate through the fan housing.

14. A fan according to claim 13, further comprising a controller arranged to vary the air flow through the fan housing in response to the air flow rate measured by the air flow sensor (2).

15. A method of measuring an air flow rate comprising:
arranging a first sensing element (28) to be exposed to an air flow pathway (24) and to output a first signal;
arranging a second sensing element (30) to output a second signal; and
comparing the first and second signals to determine the air flow rate;
**characterised by** arranging the second sensing element (30) to be isolated from the air flow pathway (24).

## Patentansprüche

1. Luftstromsensor (2), umfassend:
ein Gehäuse (4), das eine Einströmöffnung (15), eine Ausströmöffnung (16) und einen Luftstrompfad (24) von der Einströmöffnung (15) zu der Ausströmöffnung (16) aufweist;
ein erstes Erfassungselement (28), das dem Luftstrompfad (24) ausgesetzt ist; und
**gekennzeichnet durch** ein zweites Erfassungselement (30), das von dem Luftstrompfad (24) isoliert ist.

2. Luftstromsensor (2) nach Anspruch 1, wobei das zweite Erfassungselement (30) ein Temperaturerfassungselement umfasst und optional einen Widerstand mit negativem Temperaturkoeffizienten (NTC) umfasst.

3. Luftstromsensor (2) nach einem der vorstehenden Ansprüche, wobei das erste Erfassungselement (28) mindestens eine Diode umfasst, durch die im Betrieb ein elektrischer Strom fließt.

4. Luftstromsensor (2) nach Anspruch 1, wobei die Erfassungselemente (28, 30) eingerichtet sind, um gleichmäßig erwärmt zu werden.

5. Luftstromsensor (2) nach einem der vorstehenden Ansprüche, weiter umfassend einen Komparator (106), der eingerichtet ist, um Ausgaben von dem ersten und dem zweiten Erfassungselement (28, 30) zu vergleichen.

6. Luftstromsensor (2) nach einem der vorstehenden Ansprüche, weiter umfassend ein Zuluftumleitungselement (32), das sich von dem Gehäuse (4) derart erstreckt, dass Luft im Betrieb in die Einströmöffnung (15) umgeleitet wird, wobei sich optional das Zuluftumleitungselement (32) von einer Kante der Einströmöffnung (15) erstreckt.

7. Luftstromsensor (2) nach einem der vorstehenden Ansprüche, wobei das Gehäuse (4) eine Führungsoberfläche (34) umfasst, die zum Reduzieren von Druck an der Ausströmöffnung (16) eingerichtet ist.

8. Luftstromsensor (2) nach einem der vorstehenden Ansprüche, weiter umfassend zwei parallele Pfade, umfassend einen Sensorpfad (24) und einen Entlastungspfad (26).

9. Luftstromsensor (2) nach einem der vorstehenden Ansprüche, wobei das Gehäuse (4) ein internes Umlenkelement (18) umfasst, das sich zwischen der Einströmöffnung (15) und der Ausströmöffnung (16) befindet und mindestens eine primäre Öffnung (20) für den Sensorpfad (24) und eine Entlastungsöffnung (22) für den Entlastungspfad (26) umfasst, wobei optional das erste Erfassungselement (28) mindestens teilweise innerhalb der primären Öffnung (20) angeordnet ist und/oder die Entlastungsöffnung (22) allgemein in einer Linie mit der Einströmöffnung (15) ist und die primäre Öffnung (20) von der Entlastungsöffnung (22) versetzt ist.

10. Luftstromsensor (2) nach einem der vorstehenden Ansprüche, weiter umfassend eine interne Trennwand (6), die das Sensorgehäuse (4) physisch in aktive und isolierte Abschnitte (17) trennt, wobei der isolierte Abschnitt (17) im Wesentlichen von einem Luftstrom zwischen der Einström- und der Ausströmöffnung (15, 16) isoliert ist.

11. Luftstromsensor (2) nach Anspruch 10, wobei die interne Trennwand (6) den Luftstromsensor (2) entlang einer Richtung parallel zu dem Luftstrompfad (24) trennt.

12. Luftstromsensor (2) nach Anspruch 10 oder 11, wobei das erste und das zweite Erfassungselement (28, 30) an einer gedruckten Leiterplatte (PCB) (6) bereitgestellt sind und die PCB (6) mindestens teilweise die interne Trennwand (6) bildet.

13. Gebläse, umfassend:
ein Gebläsegehäuse;
wobei das Gebläse zum Erzeugen eines Luftstroms durch das Gebläsegehäuse eingerichtet ist; und
einen Luftstromsensor (2) nach einem der vorstehenden Ansprüche, der zum Messen einer Luftstromrate durch das Gebläsegehäuse eingerichtet ist.

14. Gebläse nach Anspruch 13, weiter umfassend eine Steuereinheit, die zum Variieren des Luftstroms durch das Gebläsegehäuse als Reaktion darauf, dass die Luftstromrate durch den Luftstromsensor (2) gemessen wird, eingerichtet ist.

15. Verfahren zum Messen einer Luftstromrate, umfassend:
Einrichten eines ersten Erfassungselements (28), das einem Luftstrompfad (24) ausgesetzt werden soll und zum Ausgeben eines ersten Signals;
Einrichten eines zweiten Erfassungselements (30) zum Ausgeben eines zweiten Signals und
Vergleichen des ersten und des zweiten Signals zum Bestimmen der Luftstromrate;
**gekennzeichnet durch** das Einrichten des zweiten Erfassungselements (30), um von dem Luftstrompfad (24) isoliert zu sein.

## Revendications

1. Capteur d'écoulement d'air (2) comprenant :
un boîtier (4) présentant une ouverture d'entrée (15), une ouverture de sortie (16) et un passage d'écoulement d'air (24) de l'ouverture d'entrée (15) à l'ouverture de sortie (16) ;
un premier élément de détection (28) exposé au passage d'écoulement d'air (24) ; et
**caractérisé par** un second élément de détection (30) isolé du passage d'écoulement d'air (24).

2. Capteur d'écoulement d'air (2) selon la revendication 1, dans lequel le second élément de détection (30) comprend un élément de détection de température et en option comprend une résistance à coefficient de température négative (NTC).

3. Capteur d'écoulement d'air (2) selon une quelconque revendication précédente, dans lequel le premier élément de détection (28) comprend au moins une diode, à travers laquelle, en utilisation, un courant passe.

4. Capteur d'écoulement d'air (2) selon la revendication 1, dans lequel les éléments de détection (28, 30) sont agencés pour être chauffés de manière égale.

5. Capteur d'écoulement d'air (2) selon une quelconque revendication précédente, comprenant en outre un comparateur (106) agencé pour comparer des sorties des premier et second éléments de détection (28, 30).

6. Capteur d'écoulement d'air (2) selon une quelconque revendication précédente, comprenant en outre un élément de redirection d'air d'entrée (32) qui s'étend depuis le boîtier (4) de sorte que, en utilisation, de l'air soit redirigé dans l'ouverture d'entrée (15), dans lequel en option l'élément de redirection d'air d'entrée (32) s'étend depuis un bord de l'ouverture d'entrée (15).

7. Capteur d'écoulement d'air (2) selon une quelconque revendication précédente, dans lequel le boîtier (4) comprend une surface de guidage (34) agencée pour réduire la pression au niveau de l'ouverture de sortie (16).

8. Capteur d'écoulement d'air (2) selon une quelconque revendication précédente, comprenant en outre deux passages parallèles comprenant un passage de capteur (24) et un passage de relief (26).

9. Capteur d'écoulement d'air (2) selon une quelconque revendication précédente, dans lequel le boîtier (4) comprend un déflecteur interne (18) situé entre l'ouverture d'entrée (15) et l'ouverture de sortie (16) qui comprend au moins une ouverture primaire (20) pour le passage de capteur (24) et une ouverture de relief (22) pour le passage de relief (26), dans lequel en option le premier élément de détection (28) est disposé au moins partiellement dans l'ouverture primaire (20) et/ou l'ouverture de relief (22) est généralement alignée avec l'ouverture d'entrée (15) et l'ouverture primaire (20) est décalée de l'ouverture de relief (22).

10. Capteur d'écoulement d'air (2) selon une quelconque revendication précédente, comprenant en outre un diviseur interne (6) qui divise physiquement le boîtier de capteur (4) en sections active et isolée (17), dans lequel la section isolée (17) est sensiblement isolée de tout écoulement d'air entre les ouvertures d'entrée et de sortie (15, 16).

11. Capteur d'écoulement d'air (2) selon la revendication 10, dans lequel le diviseur interne (6) divise le capteur d'écoulement d'air (2) le long d'une direction parallèle au passage d'écoulement d'air (24).

12. Capteur d'écoulement d'air (2) selon la revendication 10 ou 11, dans lequel les premier et second éléments de détection (28, 30) sont prévus sur une carte de circuit imprimé (PCB) (6), et la PCB (6) forme au moins partiellement le diviseur interne (6).

13. Ventilateur comprenant :
un boîtier de ventilateur ;
le ventilateur étant agencé pour créer un écoulement d'air à travers le boîtier de ventilateur ; et
un capteur d'écoulement d'air (2) selon une quelconque revendication précédente, agencé pour mesurer un taux d'écoulement d'air à travers le boîtier de ventilateur.

14. Ventilateur selon la revendication 13, comprenant en outre un dispositif de commande agencé pour faire varier l'écoulement d'air à travers le boîtier de ventilateur en réponse au taux d'écoulement d'air mesuré par le capteur d'écoulement d'air (2).

15. Procédé de mesure d'un taux d'écoulement d'air comprenant :
l'agencement d'un premier élément de détection (28) à exposer à un passage d'écoulement d'air (24) et servant à sortir un premier signal ;
l'agencement d'un second élément de détection (30) servant à sortir un second signal ; et
la comparaison des premier et second signaux pour déterminer le taux d'écoulement d'air ;
**caractérisé par** l'agencement du second élément de détection (30) à isoler du passage d'écoulement d'air (24).
